# EUROPEAN PATENT SPECIFICATION

(11) **EP 3 498 055 B1**
(45) Date of publication and mention of the grant of the patent: **04.03.2020**
(21) Application number: 17751316.5
(22) Date of filing: 27.07.2017
(51) Int. Cl.: H05B 6/12, H05B 3/74

(54) **THIN FILM HEATING COOKER HEATING ELEMENT CONFIGURATION**
GESTALTUNG EINES DÜNNSCHICHTKOCHFELD- HEIZELEMENT
CONFORMATION D'UN ÉLÉMENT CHAUFFANT D'UN TABLE DE CUISSON À COUCHE MINCE

(30) Priority: 08.08.2016 TR 201611097
(43) Date of publication of application: 19.06.2019
(73) Proprietor: Arçelik Anonim Sirketi, 34445 Istanbul (TR)
(72) Inventor: YAVUZ, Pinar, 34950 Istanbul (TR); KAYA, Oguzhan, 34950 Istanbul (TR); OKTAY, Ulas, 34950 Istanbul (TR); YESILCUBUK, Alper, 34950 Istanbul (TR); DUMLU, Bekir, 34950 Istanbul (TR)
(86) International application number: PCT/EP2017/069016
(87) International publication number: WO 2018/029004

(56) References cited:
- EP-A2- 1 107 648
- EP-A2- 2 618 630
- WO-A1-2014/106960
- US-A1- 2002 155 303

## Description

The present invention relates to a system for the operation of a thin film heater cooker.

It is well-known that thin film heaters are extensively used in cooking appliances operating as a cooker. Thin film heaters have a wide range of usage from windscreens to cooking. When a thin film heater is used for cooking purposes, it will normally consume approximately four times more power in comparison to its other usages. Beside space usage advantages due to the lower thickness of thin film material, a cooking hob with thin-film heating elements provides faster heating having improved efficiency and uniformity.

Among others, a prior art publication in the technical field of the invention may be referred to as EP1206164, which discloses a device for determining the location of cooking utensils on a cooking hob comprising a plurality of thermal cells distributed in matrix formation below a heat-resistant surface on which the cooking utensil can be located in random manner, the determination of its location, form and dimensions enabling those thermal cells lying below the utensil to be energized, the same thermal cells being also individually used for this determination. WO2015160890 as well as WO2014106960 disclose a thin film heater appliance.

The present invention provides a system for the operation of a thin film heating cooker with the help of sensors in various functions aimed to sense the utensil's position as provided by the characterizing features defined in Claim 1.

Primary object of the present invention is to provide a system for the operation of a thin film heating cooker.

The present invention proposes a thin film heating appliance with a plurality of preferably 4x4 matrix formation thin film heating cookers, each one comprising a plurality of thin film heating elements. The configuration can be in the form of rectangular, C-type or ring-type thin film heating elements.

A coated base below a glass surface is provided such that each thin film heating element is sandwiched between an anodization layer and said glass surface in the manner to be at least partially delimited by two busbars at different co-planar sides relative to said thin film heating element. This structural configuration is both more effective in terms of heat transfer and insulation performance but also allows easy adaptation of the thin film heating element blocks with the anodization layers due to high flexibility and shapeability of the latter in terms of manufacturing difficulties.

The anodization layer covering both lower surface of said thin film heating element and said two busbars in their entireties ensures the desired heat transfer and insulation profile.

In the case of rectangular configuration of the film heater elements, sensor units are located around the periphery of the thin film heating elements or between shorter edges of said rectangular thin film heating elements. Optic sensor couples oppositely communicate at shorter side edges and inductive sensors and capacitive sensors are disposed along longer edges. In the case of C-type and ring-type configurations, at least one sensor unit consisting of inductive, capacitive optical or load sensors is located centrally.

Accompanying drawings are given solely for the purpose of exemplifying a thin film heating cooker, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention.
Fig. 1 demonstrates a general schematic view of a rectangular type heater configuration with a thin film heating cooker comprising a plurality of distinct type sensors according to one embodiment of the present invention.
Fig. 2 demonstrates a general schematic view of the sensor type distribution in the rectangular type heater configuration according to the embodiment of Fig. 1.
Fig. 3 demonstrates a general schematic view of a C-type heating cell configuration with a thin film heating cooker comprising a plurality of distinct type sensors according to another embodiment of the present invention.
Fig. 4 demonstrates a general schematic view of a ring-type heating cell configuration with a thin film heating cooker comprising a plurality of distinct type sensors according to another embodiment of the present invention.

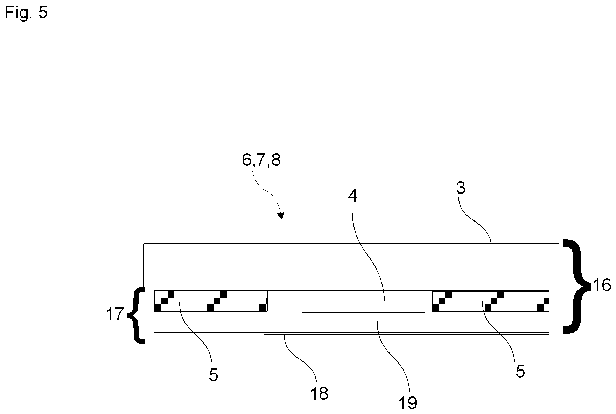

Fig. 5 demonstrates a general cross-sectional view of a configuration with a coated base and coated glass surface according to the present invention.

The following numerals are assigned to different part numbers used in the detailed description:
1. Thin film heating cooker
2. Sensor unit
3) Glass surface
4) Thin film heating element
5) Busbar
6) Rectangular type heating cell
7) C-type heating cell
8) Ring type heating cell
9) Inductive sensor
10) Capacitive sensor
11) Optic sensor
12) Load sensor
13) Rectangular thin film heating element
14) C-type thin film heating element
15) Ring type thin film heating element
16) Coated glass surface
17) Coated base
18) Substrate
19) Anodization layer

The present invention proposes a thin film heating cooker **(1)** having an inductive sensor **(9),** a capacitive sensor **(10),** an optic sensor **(11)** or a load sensor **(12)** in a sensor unit **(2).**

Anodization is a well-known controlled corrosion technique to generate a protective oxide film or layer that can prevent or decelerate oxidation in an advanced stage on a metal surface upon the circumstances of the natural or a particular environment. Anodization process can be performed generally on light metals such as; aluminum, magnesium and titanium. In this present invention, a coated base **(17)** is produced in a shapeable structure due to the nature of oxide layer generation and anodization process on the surface of aluminum panels with different thicknesses. Accordingly, the obtained structure of the coated base **(17)** thanks to the anodization process, has high insulation performance and high chemical durability.

These coated bases **(17)** are manufactured in specific forms to accommodate thin film heating elements **(4)** positioned behind the glass surface **(3),** therefore to form a coated glass surface **(16).** The coated base **(17)** has a substrate (18, Aluminum plate) and an anodization layer **(19).**

Said sensor unit **(2)** can consist of any combination of the mentioned sensors. A busbar **(5)** typically consists of electrical conductors as a generating station on which power is concentrated for distribution. Said busbars **(5)** can be formed by the ink-jet printing, Chemical Vapor Deposition (CVD) or Physical Vapor Deposition (PVD) methods in any size and geometry. Busbars **(5)** manufactured in accordance with these methods have a significant advantage of thermal performance and conductivity when compared with the busbars **(5)** applied as metal paste.

The thin film heating cooker **(1)** uses thin film heating elements **(4)** as a heating source in the form of electrically conductive material placed relative to a substrate. The thin film heating elements **(4)** can be coated by means of Sol-Gel, Spray Pyrolysis, PVD and CVD and these coating elements consist of Fluorine-doped Tin Oxide (FTO), Indium Tin Oxide (ITO), graphene, Aluminum-doped Zinc Oxide (AZO) and nano silver wire. Typically, a glass surface **(3)** is placed on the thin film heating elements **(4)** to transmit the heat to utensils that are needed to be cooked. Basically, a thin-film heating element is a conductive film forming a thin film on a substrate heating said substrate. The thin-film heating element may for instance include a tin oxide resistive film delimited by oppositely extending busbar **(5)** conductors.

The present invention, on the other hand, addresses the situation where a cooking utensil such as a pot or pan being set on the thin film heating cooker **(1)** has inductive, capacitive, optic or load sensors (9, 10, 11, 12) to sense the position and existence thereof. These sensors work as part of an integrated system to sense positionment of a cooking means as will be delineated herein below.

To this end, the inductive sensors **(9)** mentioned in accordance with the present invention typically operate in line with the Faraday's law of electromagnetic induction. As is known to the skilled reader, in case a metal object is placed across the inductive sensor **(9),** eddy currents are generated within the ferromagnetic base. In this case, change of the voltage drop at the terminals of the coil provides an indication for the presence of the metal object.

Secondly, a conventional capacitive sensor **(10)** that generates a capacitive field through an RC oscillator is provided. The metal or non-metal particle enters the capacitive field and this in turn causes a change in the dielectric level. Thereby capacitive sensors **(10)** successfully detects if there is a metal or non-metal object by means of variation of the oscillation frequency.

Further, the present invention makes use of optical sensors **(11)** or photocells comprising a transmitter or light source and a receiver to sense the light. Light source emits light at a particular frequency at the transmitting side. The receiver is used to receive the light from the source in the determined frequency.

Finally, the present invention makes use of known type of load sensors **(12)** using a strain gauge measuring the deformation as a change in electrical resistance, which is proportional to the applied forces.

In brief, inductive sensors **(9)** in the sensor unit **(2)** sense if there is a metal utensil on the glass surface **(3)** by means of the change in the voltage value of the coil that generates electromagnetic field. Capacitive sensors **(10)** in the sensor unit **(2)** sense the utensil thanks to the change in the measurement of dielectric coefficient. Optic sensors **(11)** in the sensor unit **(2)** sense the utensil whereby the utensil blocks the light that goes through the optical sensor. Load sensors **(12)** in the sensor unit **(2)** sense the utensil by means of the weight of the utensil.

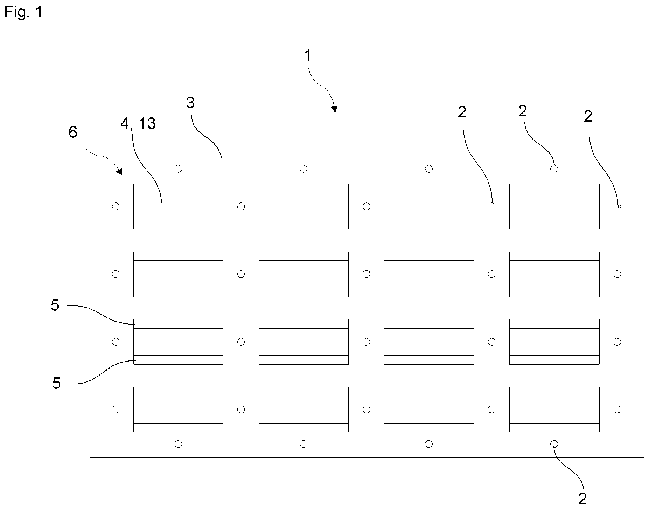

In one embodiment of the present invention, the configuration shown in Figure 1 relates to the thin film heating elements **(4)** in the form of a rectangular thin film heating element **(13).** The busbar **(5)** conductors are located oppositely along the longer edges of said rectangular thin film heating elements **(13).** The heating elements can be connected in parallel or in series to provide different power rates with the same voltage value. The sensor units **(2)** are located immediately around the periphery of the thin film heating elements **(13)** or between shorter edges of said rectangular thin film heating elements **(13).**

In this embodiment of the present invention, a rectangular type heating cell **(6)** comprises the rectangular thin film heating element **(13),** at least one sensor unit **(2)** and the busbar **(5).** The optic sensors **(11)** are peripherally located at the shorter side edges of the thin film heating cooker **(1)** surface, at an elevated level above the glass surface **(3)** at both sides of the respective thin film heating cooker of the cooking appliance; accordingly, said reciprocally operational optic sensors **(11)** will function as a transmitter and receiver to locate the correct position of the utensil. An inductive sensor **(9)** is disposed along longer edges of the thin film heating cooker **(1)** between each pair of the rectangular type heating cells **(6).** Therefore, two longitudinally neighboring thin film heating elements **(4)** share an inductive sensor **(9)** thereinbetween. Inductive sensors **(9)** and capacitive sensors **(10)** typically detect if there is a utensil immediately above a respective area. An optic sensor **(11)** can be individually used as a sensor unit **(2)** below the glass surface **(3)** and in association with a respective heating element. In this case, the optic sensor **(11)** senses presence of a pan directly above the same.

Load sensors **(12)** being centrally disposed in the middle of the thin film heating cooker **(1),** a plurality of capacitive sensors **(10)** are peripherally located along the longer edges of the thin film heating cooker **(1)** surface.

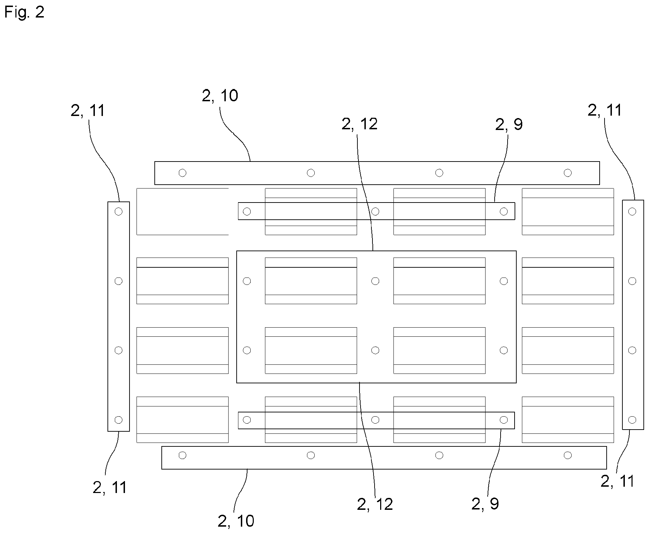

According to the embodiment of Fig. 1 or 2, the busbar **(5)** typically comprise a pair of elongate, parallel rods at two longer sides of the thin film heating elements **(4).** The configuration of busbar **(5)** conductors along two longitudinal edges provides faster and more effective heating along the surface of the thin film heating elements **(4).**

Further, advantageously, load sensors **(12)** are centrally positioned behind circumferentially bordering thin film heating elements **(4)** of the thin film heating cooker **(1).** Longer side sensor units **(2)** of the circumferentially bordering thin film heating elements **(4)** are capacitive sensors **(10)** and each neighboring pair of longer edge circumferentially bordering thin film heating elements **(4)** share an in-between inductive sensor **(9).** Therefore, advantageously, shorter edge optic sensors **(11)** and central load sensors **(12)** successfully sense presence of a cooking utensil while inductive and capacitive sensors (9, 10) together with the information received from the load sensors **(12)** specify correct positionment of the utensil. It is to be noted that the cooking appliance comprises a plurality of thin film heating cookers **(1)** with the 4x4 layout as shown in Fig. 1 and 2.

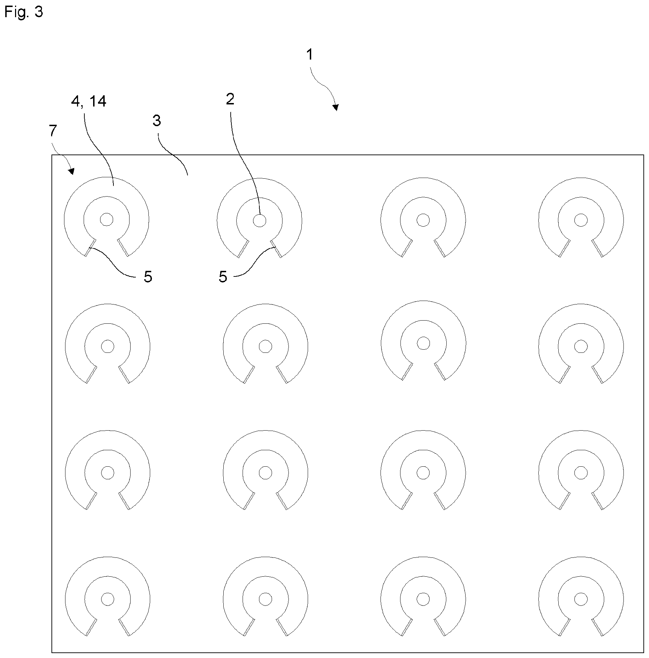

In another variation of the present invention, the configuration shown in Figure 3 relates to the thin film heating elements **(4)** in the form of a C-type thin film heating element **(14).** The busbar **(5)** is placed at two ends of the C-shape heating element, forming a perpendicularly extending terminal relative to the curved axis of the C shape structure. The heating elements can be connected in parallel or in series to provide different power rates with the same voltage value. The sensor units **(2)** are located in the center of said C type thin film heating element **(14).** The sensor unit **(2)** can be formed as a sensor assembly consisting of inductive, capacitive optical, or load sensors **(8, 9, 10, 11).**

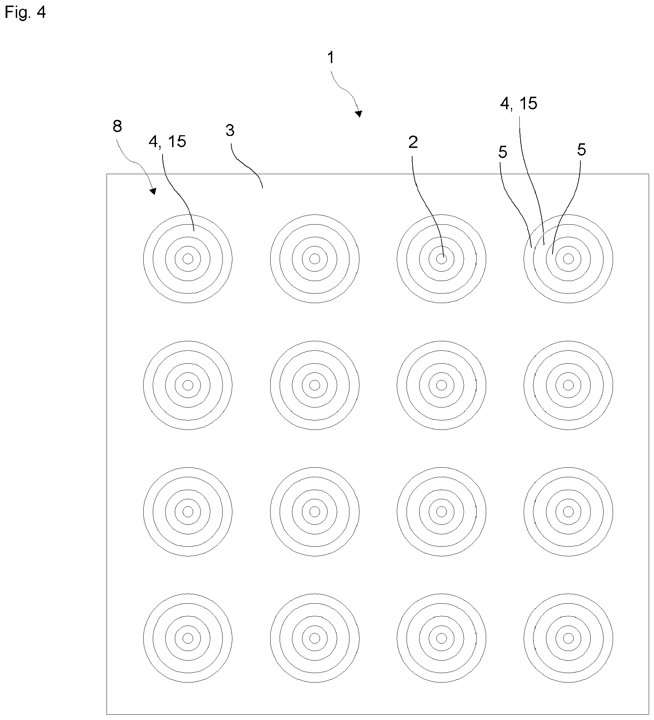

In a yet still further variation of the present invention, the configuration shown in Figure 4 comprises ring-type thin film heating elements **(15).** The busbar **(5)** conductors are configured in a ring-like shape to enclose said ring-type thin film heating element **(15)** from inside and outside the same in a radially enclosed manner. The sensor units **(2)** are located in the center of said thin film heating elements **(4).** The sensor unit **(2)** can be consisted of inductive, capacitive, optical or load sensors **(8, 9, 10, 11).**

In one embodiment of the present invention, a thin film heater cooking appliance is proposed, comprising at least one thin film heating cooker **(1),** said at least one thin film heating cooker **(1)** comprising a plurality of thin film heating elements **(4)** forming a two-dimensional web of neighboring thin film heating elements **(4)** and at last one sensor unit **(2)** in the form of an inductive sensor **(9),** a capacitive sensor **(10),** an optic sensor **(11)** or a load sensor **(12),** each of said thin film heating elements **(4)** being supplied power by a busbar **(5).**

In a further embodiment of the present invention, a coated base is provided such that each thin film heating element **(4)** is placeable on an anodization layer **(19)** so as to be at least partially delimited by two busbars **(5)** at different co-planar sides relative to said thin film heating element **(4).**

In a further embodiment of the present invention, each thin film heating element **(4)** is configured to be interposed between said anodization layer **(19)** and an upper glass surface **(3)** in the manner that said anodization layer **(19)** covers both lower surface of said thin film heating element **(4)** and lower surfaces of said two busbars **(5)** in their entireties.

In a further embodiment of the present invention, said anodization layer **(19)** is created on an Aluminum substrate **(19),** said substrate being free of contact relation with said busbars **(5).** Therefore, the formation of a heat bridge is avoided.

In a further embodiment of the present invention, said busbars **(5)** and thin film heating elements **(4)** are formed on the anodization layer **(19)** through chemical vapor deposition or physical vapor deposition.

In a further embodiment of the present invention, said thin film heating elements **(4)** are formed by fluorine-doped tin oxide, indium tin oxide, graphene, aluminum-doped zinc oxide or nano silver wire.

In a further embodiment of the present invention, each of said thin film heating elements **(4)** are in the form of a rectangular thin film heating element **(13)** and said busbar **(5)** conductors are located oppositely along the longer edges of said rectangular thin film heating elements **(13).**

In a further embodiment of the present invention, each of said sensor units **(2)** are located around the periphery of the thin film heating elements **(13)** or between shorter edges of said rectangular thin film heating elements **(13).**

In a further embodiment of the present invention, said optic sensors **(11)** are peripherally located at the shorter side edges of the thin film heating cooker **(1)** surface.

In a further embodiment of the present invention, an inductive sensor **(9)** is disposed along longer edges of the thin film heating cooker **(1)** between each pair of the rectangular thin film heating elements **(13).**

In a further embodiment of the present invention, two longitudinally neighboring thin film heating elements **(4)** share an inductive sensor **(9)** thereinbetween.

In a further embodiment of the present invention, load sensors **(12)** are centrally positioned behind circumferentially extending thin film heating elements **(4)** bordering the edges of said thin film heating cooker **(1).**

In a further embodiment of the present invention, a plurality of capacitive sensors **(10)** is peripherally located along the longer edges of the thin film heating cooker **(1)** surface.

In a further embodiment of the present invention, said thin film heating appliance comprises a plurality of thin film heating cookers with a 4x4 layout of thin film heating elements **(4).**

In a further embodiment of the present invention, each of said thin film heating elements **(4)** are in the form of a C-type thin film heating element **(14)** with busbar **(5)** conductors placed at two ends of the C-type thin film heating element **(14),** forming a perpendicularly extending terminal relative to the curved axis of the C-shape structure.

In a further embodiment of the present invention, each of said thin film heating elements **(4)** are in the form of ring type thin film heating elements **(15)** with busbar **(5)** conductors configured as a ring-like shape to enclose said ring type thin film heating element **(15)** from inside and outside the same in a radial manner.

In a further embodiment of the present invention, a sensor assembly comprising at least one sensor unit **(2)** consisting of inductive, capacitive optical or load sensors **(8, 9, 10, 11)** is located in the center of said C type thin film heating element **(14)** or said ring type thin film heating element **(15).**

The C-type configuration is advantageous in that the surface area of the thin film heating elements **(14)** provide a more concentrated heating in view of the more compact space usage by each C-type element and also provides acceptably fast heating results compared to the smaller busbar **(5)** conductor sizes.

On the other hand, the ring-type configuration is both advantageous in fast heating due to fully enclosing busbar **(5)** conductors with sizes substantially greater than the C-type configuration. Further, fast and effective heating is achieved thanks to the ring type thin film heating elements **(15).**

## Claims

1. A thin film heater cooking appliance comprising at least one thin film heating cooker **(1),** said at least one thin film heating cooker **(1)** comprising a plurality of thin film heating elements **(4)** forming a two-dimensional web of neighboring thin film heating elements **(4)** and at last one sensor unit **(2)** in the form of an inductive sensor **(9),** a capacitive sensor **(10),** an optic sensor **(11)** or a load sensor **(12),** each of said thin film heating elements **(4)** being supplied power by a busbar **(5) characterized in that;**
a coated base **(17)** is provided such that each thin film heating element **(4)** is placed on an anodization layer **(19)** so as to be at least partially delimited by two busbars **(5)** at different co-planar sides relative to said thin film heating element **(4)** and,
each thin film heating element **(4)** is configured to be interposed between said anodization layer **(19)** and an upper glass surface **(3)** in the manner that said anodization layer **(19)** covers both lower surface of said thin film heating element **(4)** and lower surfaces of said two busbars **(5)** in their entireties.

2. A thin film heater cooking appliance as in Claim 1, **characterized in that** said anodization layer **(19)** is created on a substrate **(18),** said substrate **(18)** being free of contact relation with said busbars **(5).**

3. A thin film heater cooking appliance as in Claim 1 or 2, **characterized in that** said busbars **(5)** and thin film heating elements **(4)** are formed on the anodization layer **(19)** through chemical vapor deposition or physical vapor deposition.

4. A thin film heater cooking appliance as in Claim 1, 2, or 3, **characterized in that** said thin film heating elements **(4)** are formed by fluorine-doped tin oxide, indium tin oxide, graphene, aluminum-doped zinc oxide or nano silver wire.

5. A thin film heater cooking appliance as in any preceding Claim, **characterized in that** each of said thin film heating elements **(4)** are in the form of a rectangular thin film heating element **(13)** and said busbar **(5)** conductors are located oppositely along the longer edges of said rectangular thin film heating elements **(13).**

6. A thin film heater cooking appliance as in Claim 5, **characterized in that** each of said sensor units **(2)** are located around the periphery of the thin film heating elements **(13)** or between shorter edges of said rectangular thin film heating elements **(13).**

7. A thin film heater cooking appliance as in Claim 5 or 6, **characterized in that** the thin film heating cooker **(1)** comprises sensor units **(2)** in the form of optic sensors **(11)** which are peripherally located at the shorter side edges of the thin film heating cooker **(1)** surface.

8. A thin film heater cooking appliance as in Claim 5, 6 or 7, **characterized in that** the thin film heating cooker **(1)** comprises sensor units **(2)** in the form of inductive sensors **(9)** which are disposed along longer edges of the thin film heating cooker **(1)** between each pair of the rectangular thin film heating elements **(13).**

9. A thin film heater cooking appliance as in Claim 8, **characterized in that** two longitudinally neighboring thin film heating elements **(4)** share an inductive sensor **(9)** thereinbetween.

10. A thin film heater cooking appliance as in any of Claim 5 to 9, **characterized in that** the thin film heating cooker **(1)** comprises sensor units **(2)** in the form of load sensors **(12)** which are centrally positioned behind circumferentially extending thin film heating elements **(4)** bordering the edges of said thin film heating cooker **(1).**

11. A thin film heater cooking appliance as in any of Claim 5 to 10, **characterized in that** the thin film heating cooker **(1)** comprises sensor units **(2)** in the form of capacitive sensors **(10)** which are peripherally located along the longer edges of the thin film heating cooker **(1)** surface.

12. A thin film heater cooking appliance as in Claim 1, **characterized in that** said thin film heating appliance comprises a plurality of thin film heating cookers with a 4x4 layout of thin film heating elements **(4).**

13. A thin film heater cooking appliance as in Claim 1, **characterized in that** each of said thin film heating elements **(4)** are in the form of a C-type thin film heating element **(14)** with busbar **(5)** conductors placed at two ends of the C-type thin film heating element **(14),** forming a perpendicularly extending terminal relative to the curved axis of the C-shape structure.

14. A thin film heater cooking appliance as in Claim 1, **characterized in that** each of said thin film heating elements **(4)** are in the form of ring type thin film heating elements **(15)** with busbar **(5)** conductors configured as a ring-like shape to enclose said ring type thin film heating element **(15)** from inside and outside the same in a radial manner.

15. A thin film heater cooking appliance as in Claim 13 and 14, **characterized in that** a sensor assembly comprising at least one sensor unit **(2)** consisting of inductive, capacitive optical or load sensors **(8, 9, 10, 11)** is located in the center of said C type thin film heating element **(14)** or said ring type thin film heating element **(15).**

## Patentansprüche

1. Ein Dünnschichtheizkochgerät **umfasst** mindestens einen Dünnschichtheizkocher **(1),** wobei dieser mindestens eine Dünnschichtheizkocher **(1)** mehrere Dünnschichtheizelemente **(4)** umfasst, die eine zweidimensionale Bahn von benachbarten Dünnschichtheizelementen **(4)** bilden; mindestens eine Sensoreinheit **(2)** in Form von einen induktiven Sensor **(9),** einen kapazitiven Sensor **(10),** einen optischen Sensor **(11)** oder einen Lastsensor **(12),** wobei jedes der Dünnschichtheizelemente **(4)** durch eine Stromschiene **(5)** mit Strom versorgt wird; **gekennzeichnet ist es dadurch,** dass
eine beschichtete Basis **(17)** so vorgesehen ist, dass jedes Dünnschichtheizelement **(4)** auf einer Anodisierungsschicht **(19)** so angeordnet ist, dass es zumindest teilweise durch zwei Stromschienen **(5)** an verschiedenen komplanaren Seiten in Bezug auf die Dünnschichtheizelement **(4)** begrenzt ist und
dass jedes Dünnschichtheizelement **(4)** so konfiguriert ist, dass es zwischen der Anodisierungsschicht **(19)** und einer oberen Glasoberfläche **(3)** derartig angeordnet ist, dass die Anodisierungsschicht **(19)** beide unteren Oberflächen des Dünnschichtheizelements **(4)** und Unterseiten der beiden Stromschienen **(5)** in ihrer Gesamtheit bedeckt.

2. Ein Dünnschichtheizkochgerät, wie in Anspruch 1 aufgeführt, **ist dadurch gekennzeichnet, dass** die Anodisierungsschicht **(19)** auf einem Substrat **(18)** erzeugt ist, wobei das Substrat **(18)** keine Kontaktbeziehung zu den Sammelschienen **(5)** darstellt.

3. Ein Dünnschichtheizkochgerät, wie in Anspruch 1 oder 2 aufgeführt, **ist dadurch gekennzeichnet, dass** die Sammelschienen **(5)** und Dünnschichtheizelemente **(4)** auf der Anodisierungsschicht **(19)** durch ein chemisches Aufdampfen oder physikalisches Aufdampfen gebildet sind.

4. Ein Dünnschichtheizkochgerät, wie in Anspruch 1, 2 oder 3 aufgeführt, **ist dadurch gekennzeichnet, dass** die Dünnschichtheizelemente **(4)** durch mit Fluor dotiertes Zinnoxid, Indiumzinnoxid, Graphen, mit Aluminium dotiertes Zinkoxid oder Nanosilberdraht gebildet sind.

5. Ein Dünnschichtheizkochgerät, wie in einem der vorherigen Ansprüchen aufgeführt, **ist dadurch gekennzeichnet, dass** jedes der Dünnschichtheizelemente **(4)** die Form eines rechteckigen Dünnschichtheizelements **(13)** hat und dass die Leiter der Sammelschiene **(5)** gegenüberliegend entlang den längeren Rändern der rechteckigen Dünnschichtheizelemente **(13)** angeordnet sind.

6. Ein Dünnschichtheizkochgerät, wie in Anspruch 5 aufgeführt, **ist dadurch gekennzeichnet, dass** jede Sensoreinheit **(2)** um den Umfang der Dünnschichtheizelemente **(13)** oder zwischen den kürzeren Kanten der rechteckigen Dünnschichtheizelemente **(13)** angeordnet ist.

7. Ein Dünnschichtheizkochgerät, wie in Anspruch 5 oder 6 aufgeführt, **ist dadurch gekennzeichnet, dass** der Dünnschichtheizkocher **(1)** Sensoreinheiten **(2)** in Form von optischen Sensoren **(11)** aufweist, wobei diese peripher an den kürzeren Seitenkanten der Oberfläche des Dünnschichtheizkocher **(1)** angeordnet sind.

8. Ein Dünnschichtheizkochgerät, wie in Anspruch 5, 6 oder 7 aufgeführt, **ist dadurch gekennzeichnet, dass** der Dünnschichtheizkocher **(1)** Sensoreinheiten **(2)** aufweist, die in Form von induktiven Sensoren **(9)** sind und entlang der längeren Kante des Dünnschichtheizkochers **(1)** zwischen jedem Paar der rechteckigen Dünnschichtheizelementen **(13)** angeordnet sind.

9. Ein Dünnschichtheizkochgerät, wie in Anspruch 8 aufgeführt, **ist dadurch gekennzeichnet, dass** sich zwei in Längsrichtung benachbarte Dünnschichtheizelemente **(4)** einen induktiven Sensor **(9)** teilen.

10. Ein Dünnschichtheizkochgerät, wie in den Ansprüchen 5 bis 9 aufgeführt, **ist dadurch gekennzeichnet, dass** der Dünnschichtheizgerät **(1)** Sensoreinheiten **(2)** in Form von Lastsensoren **(12)** aufweist, die sich mittig hinter in Umfangsrichtung erstreckenden Dünnschichtheizelementen **(4)** angeordnet sind, die an die Ränder des Dünnschichtkochers **(1)** angrenzen.

11. Ein Dünnschichtheizkochgerät, wie in den Ansprüchen 5 bis 10 aufgeführt, **ist dadurch gekennzeichnet, dass** der Dünnschichtheizgerät **(1)** Sensoreinheiten **(2)** in Form von kapazitiven Sensoren **(10)** aufweist, die peripher entlang der längeren Kanten der Oberfläche des Dünnschichtkochers **(1)** angeordnet sind.

12. Ein Dünnschichtheizkochgerät, wie in Anspruch 1 aufgeführt, **ist dadurch gekennzeichnet, dass** das Dünnschichtheizgerät eine Vielzahl von Dünnschichtheizgeräten mit einer 4x4-Anordnung von Dünnschichtheizelementen **(4)** umfasst.

13. Ein Dünnschichtheizkochgerät, wie in Anspruch 1 aufgeführt, **ist dadurch gekennzeichnet, dass** jedes der Dünnschichtheizelemente **(4)** die Form eines C-Typ-Dünnschichtheizelements **(14)** mit Stromschienenleitern **(5)** aufweist, die an zwei Enden des C-Typ-Dünnschichtheizelements **(14)** angeordnet sind, wobei ein sich senkrecht zur gekrümmten Achse der C-förmigen Struktur erstreckender Anschluss gebildet wird.

14. Ein Dünnschichtheizkochgerät, wie in Anspruch 1 aufgeführt, **ist dadurch gekennzeichnet, dass** jedes Dünnschichtheizelemente **(4)** als ringförmige Dünnschichtheizelemente **(15)** mit Stromschienen **(5)** ausgebildet sind, die als ringförmige Leiter hergestellt sind, damit das ringförmige Dünnschichtheizelement **(15)** von außen und innen gleichzeitig ab zu schließen.

15. Ein Dünnschichtheizkochgerät, wie in den Ansprüchen 13 und 14 aufgeführt, **ist dadurch gekennzeichnet, dass** eine Sensoranordnung mit mindestens einer Sensoreinheit **(2),** die aus induktiven, kapazitiven optischen oder Lastsensoren (8, 9, 10, 11) besteht, sich in der Mitte des C-Typ-Dünnschichtheizelements **(14)** oder des Ringtyps Dünnschichtheizelement **(15)** befindet.

## Revendications

1. Un appareil de cuisson chauffant à couche mince comprenant au moins un cuiseur chauffant à couche mince **(1),** ledit cuiseur chauffant à couche mince **(1)** comprenant une pluralité d'éléments chauffants à couche mince **(4)** formant un réseau à deux dimensions d'éléments chauffants à couche mince **(4)** avoisinants et au moins une unité de détection **(2)** sous forme d'un capteur inductif **(9),** d'un capteur capacitif **(10),** d'un capteur optique **(11)** ou d'un capteur de charge **(12),** chacun desdits éléments chauffants à couche mince **(4)** étant alimenté par une barre omnibus (5) **caractérisée en ce que;**
une base revêtue **(17)** est prévue de telle sorte que chaque élément chauffant à couche mince **(4)** soit placé sur une couche d'anodisation **(19)** de manière à être au moins partiellement délimité par deux barres omnibus **(5)** sur les différents côtés coplanaires relativement audit élément chauffant à couche mince **(4)** et,
chaque élément chauffant à couche mince **(4)** est configuré de sorte à s'interposer entre ladite couche d'anodisation **(19)** et une surface supérieure en verre **(3)** de manière à ce que ladite couche d'anodisation **(19)** recouvre à la fois la surface inférieure dudit élément chauffant à couche mince **(4)** et les surfaces inférieures desdits deux barres omnibus **(5)** dans leur intégralité.

2. Un appareil de cuisson chauffant à couche mince selon la Revendication 1, **caractérisé en ce que** ladite couche d'anodisation **(19)** est créée sur un substrat **(18),** ledit substrat **(18)** étant sans relation de contact avec lesdites barres omnibus **(5).**

3. Un appareil de cuisson chauffant à couche mince selon la Revendication 1 ou 2, **caractérisé en ce que** lesdites barres omnibus **(5)** et lesdits éléments chauffants à couche mince **(4)** sont formés sur la couche d'anodisation **(19)** par déposition chimique en phase vapeur ou déposition physique en phase vapeur.

4. Un appareil de cuisson chauffant à couche mince selon la Revendication 1, 2 ou 3, **caractérisé en ce que** lesdits éléments chauffants à couche mince **(4)** sont formés à base d'oxyde d'étain dopé au fluor, d'oxyde d'étain-indium, de graphène, d'oxyde de zinc dopé à l'aluminium ou de fil nano-argent.

5. Un appareil de cuisson chauffant à couche mince selon l'une quelconque des revendications précédentes, **caractérisé en ce que** chacun desdits éléments chauffants à couche mince **(4)** est sous forme d'élément chauffant à couche mince rectangulaire **(13)** et les conducteurs de ladite barre omnibus **(5)** sont placés en s'opposant le long des bords longs desdits éléments chauffants à couche mince rectangulaires **(13).**

6. Un appareil de cuisson chauffant à couche mince selon la Revendication 5, **caractérisé en ce que** chacune desdites unités de détection **(2)** est située autour de la périphérie des éléments chauffants à couche mince **(13)** ou entre les bords les plus courts desdits éléments chauffants à couche mince rectangulaires **(13).**

7. Un appareil de cuisson chauffant à couche mince selon la Revendication 5 ou 6, **caractérisé en ce que** le cuiseur chauffant à couche mince **(1)** comprend des unités de détection **(2)** sous forme de capteurs optiques **(11)** lesquels sont situés en périphérie sur les bords latéraux plus courts de la surface du cuiseur chauffant à couche mince **(1).**

8. Un appareil de cuisson chauffant à couche mince selon la Revendication 5, 6 ou 7, **caractérisé en ce que** le cuiseur chauffant à couche mince **(1)** comprend des unités de détection **(2)** sous forme de capteurs inductifs **(9)** lesquels sont situés le long des bords plus longs du cuiseur chauffant à couche mince **(1)** entre chaque pair d'éléments chauffants à couche mince rectangulaire **(13).**

9. Un appareil de cuisson chauffant à couche mince selon la Revendication 8, **caractérisé en ce que** deux éléments chauffants à couche mince **(4)** qui s'avoisinent longitudinalement partagent entre eux un capteur inductif **(9).**

10. Un appareil de cuisson chauffant à couche mince selon la Revendication 5 ou 9, **caractérisé en ce que** le cuiseur chauffant à couche mince **(1)** comprend des unités de détection **(2)** sous forme de capteurs de charge **(12)** lesquels sont positionnés centralement derrière les éléments chauffants à couche mince **(4)** s'étendant circonférentiellement en bordure des bords dudit cuiseur chauffant à couche mince **(1).**

11. Un appareil de cuisson chauffant à couche mince selon la Revendication 5 ou 10, **caractérisé en ce que** le cuiseur chauffant à couche mince **(1)** comprend des unités de détection **(2)** sous forme de capteurs capacitifs **(10)** lesquels sont situés en périphérie les long des bords plus longs de la surface du cuiseur chauffant æ couche mince **(1).**

12. Un appareil de cuisson chauffant à couche mince selon la Revendication 1, **caractérisé en ce que** ledit appareil de chauffage à couche mince comprend une pluralité de cuiseurs chauffants à couche mince avec les éléments chauffants à couche mince **(4)** en disposition 4x4.

13. Un appareil de cuisson chauffant à couche mince selon la Revendication 1, **caractérisé en ce que** chacun desdits éléments chauffants à couche mince **(4)** est sous forme d'élément chauffant à couche mince de type-C **(14)** avec des conducteurs de barre omnibus **(5)** placés aux deux extrémités des éléments chauffants à couche mince de type-C **(14),** formant une borne s'étendant perpendiculairement par rapport à l'axe incurvé de la structure en forme de C.

14. Un appareil de cuisson chauffant à couche mince selon la Revendication 1, **caractérisé en ce que** chacun desdits éléments chauffants à couche mince **(4)** se présente sous forme d'éléments chauffants à couche mince en forme d'anneau **(15)** avec des conducteurs de barre omnibus **(5)** configurés en forme d'anneau pour renfermer ledit élément chauffant à couche en forme d'anneau **(15)** à partir de l'intérieur et pareillement de l'extérieur de manière radiale.

15. Un appareil de cuisson chauffant à couche mince selon la Revendication 1, **caractérisé en ce que** un ensemble de capteur comprenant au moins une unité de détection **(2)** constituée de capteurs inductifs, capacitifs, optiques ou de charge **(8, 9, 10, 11)** est situé au centre dudit élément chauffant à couche mince de type C **(14)** ou dudit élément chauffant à couche mince en forme d'anneau **(15).**
